(19) Europäisches Patentamt

European Patent Office

Office européen des brevets

(11) **EP 1 681 561 A1**

(12) **EUROPEAN PATENT APPLICATION**

(43) Date of publication:
**19.07.2006 Bulletin 2006/29**

(51) Int Cl.:
***G01N 23/207*** (2006.01)

(21) Application number: **05270089.5**

(22) Date of filing: **08.12.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **14.01.2005 US 36593**

(71) Applicant: **Bede Scientific Instruments Limited Durham DH1 1TW (GB)**

(72) Inventors:
• **Bowen, David Keith**
  **CV34 5TD, Warwick (GB)**

• **Feichtinger, Petra**
  **5270, Mauerkirchen (AT)**
• **Wormington, Matthew**
  **CO 80130, Littleton (US)**
• **Spence, John**
  **DH2 3DT, Chester le Street (GB)**
• **Matney, Kevin**
  **80015, Centennial (US)**

(74) Representative: **Jones, Keith William et al**
**Murgitroyd & Company**
**Scotland House**
**165-169 Scotland Street**
**Glasgow G5 8PL (GB)**

(54) **Positioning Apparatus**

(57)     An X-ray source (24), a detector (26) and a specimen (20) are mutually positioned by an apparatus which includes two spaced, parallel linear actuators (32,36) each movable along a gantry (34). The source (24) and detector (26) can be moved vertically by the actuators (32,36) and rotationally by rotary actuators (28,30). Equivalent arrangements are also described.

FIG. 2

EP 1 681 561 A1

## Description

This invention relates to apparatus for highly accurate positioning of three items with respect to each other. The invention is particularly applicable to positioning apparatus for use in X-ray metrology and inspection which require precision control of angle as well as relative distances and sphere of confusion.

X-ray metrology and X-ray inspection make use of an X-ray source and an X-ray detector to effect measurements of interest on a specimen. A typical example is the measurement of characteristics of a silicon wafer by X-ray diffraction, topography, reflection or fluorescence. In such measurements, it is important to accurately control the angles of the incident and detected beams relative to the specimen. The distances between the source and the specimen, and between the specimen and the detector, are also controlled. In addition, there is often a requirement for the specimen to scan in several degrees of freedom, in particular on X, Y and Z axes and rotation about its surface normal.

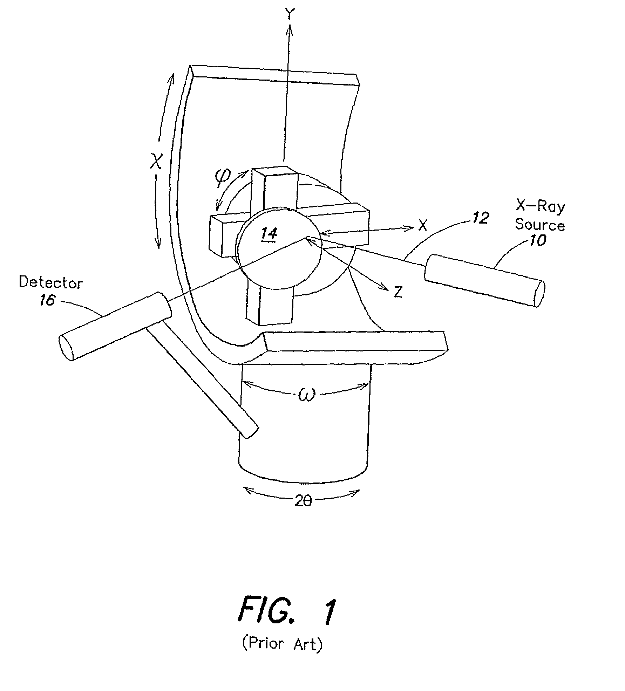

Fig. 1 shows an example of a prior art construction. An X-ray source 10 generates an incident beam 12 which is reflected from a specimen 14 to a detector 16. The spacing between the source 10 and the specimen 14, and between the specimen 14 and the detector 16, are set during manufacture. The angles of the source 10 and detector 16 relative to the specimen 14 can be adjusted as indicated at $\omega$ and $2\theta$ by means of suitable bearings and rotary actuators, e.g. servo or stepper motors. The specimen 14 can be translated in mutually orthogonal X, Y and Z directions by means of suitable linear actuators. The specimen can also be rotated about a Z axis as indicated at $\phi$, and can also be rotated about an X axis as indicated at $\chi$.

Such conventional designs have problems in achieving the required very high degree of accuracy, especially angular accuracy. This is at least in part due to the fact that thermal and gravitational effects on elements of the apparatus vary according to orientation. For example, on rotation about the $\phi$ or $\chi$ axes the X and Y slide drives will experience different gravitational forces. Hitherto, attempts to improve accuracy have centred on improving the mechanical rigidity of apparatus of the type shown in Fig. 1. Such conventional design also limits the freedom in constant variation of the distance between the X-ray source (and any corresponding X-ray source optics) and the specimen, and between the Detector (and any associated detector optics) and the specimen.

Accordingly, an object of the present invention is to provide a positioning apparatus suitable for use in X-ray metrology which overcomes or mitigates these problems. The invention is defined in the appended claims.

An embodiment of the invention will now be described, by way of example, with reference to the drawings, in which:

Fig. 1 illustrates the prior art, as discussed above;
Fig. 2 is a schematic perspective view of one embodiment of the present invention;
Figs. 3 and 4 are schematic side views illustrating operation of the embodiment of Fig. 2;
Fig. 5 defines various relationships in the same embodiment; and
Figs. 6 and 7 are schematic side views of alternative embodiments.

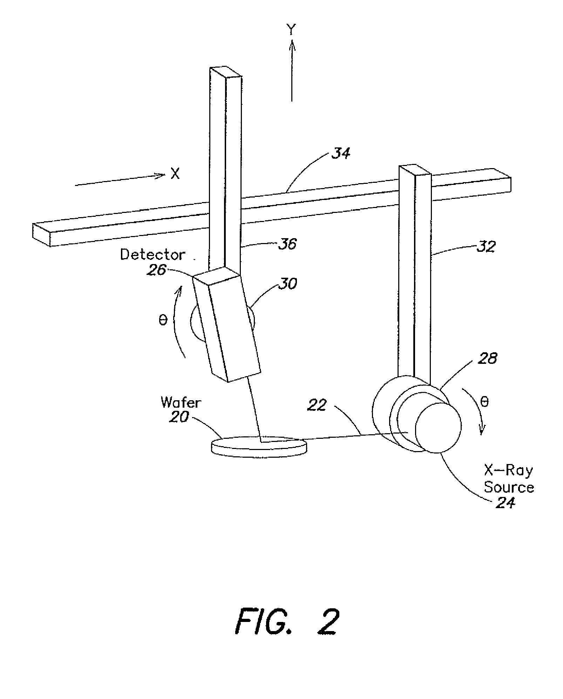

Referring to Fig. 2, a specimen 20 reflects an incident beam 22 from an X-ray source 24 to a detector 26. The source 24 is mounted on a rotating stage 28, and the detector 26 is mounted on a rotating stage 30, the stages 28 and 30 controlling the angles of incidence and of scattering to the desired degree of precision.

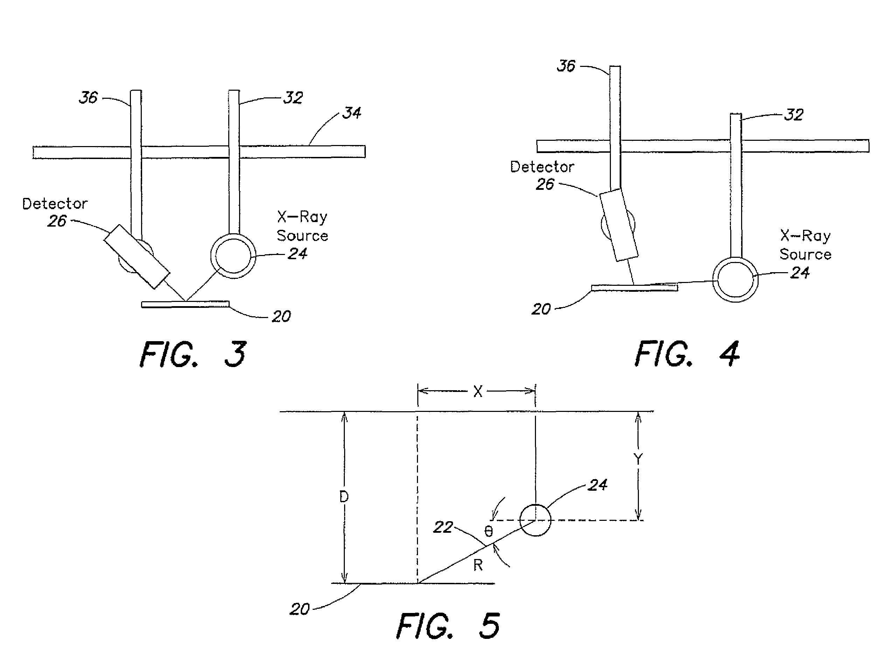

The stage 28 for the source 24 is carried on a vertical linear slide 32, which in turn is carried on a horizontal slide on a gantry 34. Likewise, the stage 30 for the detector 26 is carried on a vertical linear slide 36 which is carried on a horizontal slide on the gantry 34. The source 24 and detector 26 are thus movable in X, Y and $\theta$; these may be combined by appropriate trigonometry to function as the desired (R,$\theta$) drives. Figs. 3 and 4 illustrate typical movements.

The vertical slides are counterbalanced by linear springs or equivalent, so that the force required to move them is small. It is inherently constant over its whole range, whatever the positions of the other axes. This applies to all of the linear axes, and also to the rotary axes if appropriately balanced. With good quality slides, the required driving force is purely to counter the inertia of the components. This is in contrast to the prior art of Fig. 1, as discussed above.

A practical embodiment makes use of high quality slides, linear force motors, and encoder strips on the slides to provide positional information. For example, the slides may be SSR series linear guides by THK, the motors may be "ServoTube" linear force motors (e.g. TB2510 series) by Copley Controls Corporation, and the encoders may be Renishaw encoders (e.g. RGH series). A still higher long-term thermal stability could be achieved by mounting the encoder strips on Zerodur® slides each attached at only one point to the system; such a "metrology frame" method, used in ultrahigh precision machine tools, largely gives independence from thermal distortions in the gantry.

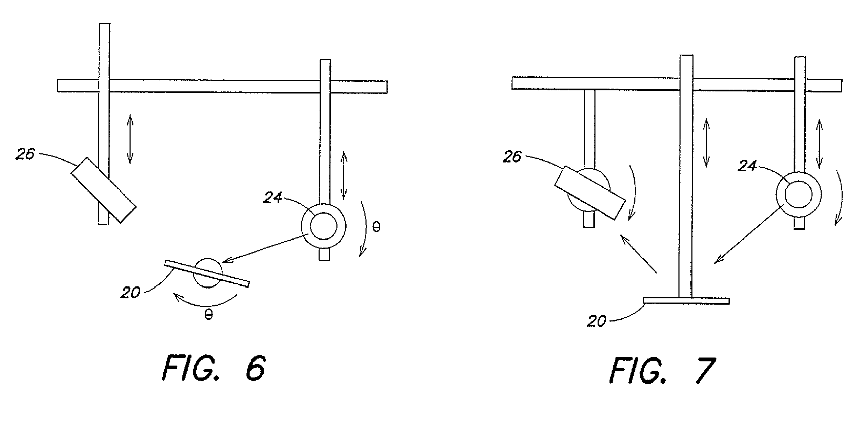

It will be appreciated that the present invention is based on a generic arrangement of rotary and linear axes that provide the necessary degrees of freedom. The arrangement of Figs. 2 to 4 is one example, but others are possible. Fig. 6 shows an arrangement in which the detector 26 is fixed to the vertical slide 36 while the specimen 20 can be rotated in $\theta$. In Fig. 7, the detector 26 is fixed in the Y direction, while the specimen 20 can be moved in Y. Also, in any of these arrangements the specimen may be mounted on a stage movable in the Z direction with respect to the incident beam 22. In addition, not shown in Fig. 6, the specimen may be rotated in a direction χ about an axis which is a horizontal axis perpendicular to the plane of the drawing, and also rotated in a direction φ about the Z axis, the latter being important for high resolution X-ray diffractometry.

Important features of the invention and of specific embodiments are as follows:

1. The centre of rotation for the critical axes does not have to be defined at manufacture. It is selected through software.

    a. By use of optical encoders and calibration, a much higher precision of location can be achieved at economic cost, than with a conventional diffractometer.
    b. Different specimen stages can be used with no mechanical redesign

2. The distance of source and detector to specimen does not have to be defined at manufacture. It is also selected through software, and can be rapidly changed even during a measurement. This allows:

    a. much more flexibility in the selection and use of X-ray optics
    b. The ability to use short focal distances
    c. The means to optimize every type of measurement, which translates into throughput improvement
    d. The ability fully to exploit novel detectors, such as CCDs and to optimize their positioning.

3. The axes are arranged so that the mechanical impedance is constant whatever their position.

    a. This is a great advantage for tuning (i.e. adjustment of the motion control loop for optimal performance of the axes) and for reliability. On existing tools, it is a major challenge to obtain tuning settings that work well whatever the position of the axis (e.g. the Z axis must work when inverted, with gravity acting in the opposite direction).
    b. Motors can be driven at optimum conditions at all times, increasing throughput.

4. It is simpler to use modern linear motor devices, with no moving parts and no mechanical couplings

    a. This gives reduced contamination to the specimen.
    b. It is mechanically simpler and more reliable.
    c. It eliminates downtime caused by coupling failure.

A traditional goniometer with horizontal axes (horizontal sample) is difficult to construct at economical cost, since bending moments on the arms change with position of the axes. The construction has to be heavy and large to counteract this effect. The system described herein is naturally applicable to horizontal specimen mounting. This has a great advantage in throughput for a fabrication line application, since no time need be wasted in rotating the sample to a vertical measuring position.

**Mathematical description**

Figure 5 shows the geometry and notation. An X-ray source is to be controlled so that the beam accurately strikes a single point on the specimen. This will also be the centre of rotation. The source is rotated about its own centre It is, further, translated in X (horizontal) and Y (vertical).

D is the vertical offset between the wafer surface and the centre line of the horizontal axis, i.e. when $Y=D$ the source is on the surface of the wafer.

$Y$ is the vertical displacement from the centre line of the horizontal axis.

X is the horizontal displacement from the centre of the wafer.

θ is the angle of rotation of the source. When θ =0 the beam is horizontal.

$R$ is the distance of the source from the wafer centre

The algorithm for setting the positions of the X-ray source is as follows:

1. To set the angle of incidence, simply rotate θ. This is always equal to the angle of incidence to the surface.
2. Transform axes to start on the centre of the wafer. X is unchanged but Y becomes

$$Y' = D-Y \qquad\qquad\qquad (1)$$

3. Select the desired value of R. Then,

$$X = R \cos\theta \qquad (2)$$

$$Y' = R \sin\theta \qquad (3)$$

Hence

$$Y = D - R \sin\theta \qquad (4)$$

Similar equations apply to the detector, with simply a change of sign of $X$.

A Z shift of the specimen relative to the source and detector, to accommodate a different thickness specimen, is simply a change in D.

The X slides may be used to translate the beam over the specimen, but a lower inertia and higher performance may be gained by having a separate $X$ (and $Y$) stage for the specimen.

This is all straightforward to set up in software.

**Errors**

The position, $S$, of the incident beam stripe on a fixed sample and observed by a fixed detector is calculated using

$$S = Y' \tan^{-1}\theta + X \qquad (5)$$

If we want to calculate the error associated with $S$, due to the errors in the contributing axes $X, Y'$ and q then we may use standard statistical methods. The error, $\sigma_f^2$, in a function $f(\mathbf{p})$ of several parameters $\mathbf{p}=(p_1, p_2...)$ due to the errors in the parameters $\sigma_1, \sigma_2...$ is given by

$$\sigma_f^2 = \left(\frac{\partial f}{\partial p_1}\right)\sigma_1^2 + \left(\frac{\partial f}{\partial p_2}\right)\sigma_2^2 + ... \qquad (6)$$

Substituting equation 5 into equation 6 then we obtain the error in the position of the diffraction stripe due to errors in the source axes, namely

$$\sigma_{source}^2 = \sigma_x^2 + \sigma_z^2 \tan^{-1}\alpha - \sigma_\alpha^2 z \sin^{-2}\alpha \qquad (7)$$

Taking into account additional errors from the position errors in the sample position and detector position we obtain the final result

$$\sigma = \sqrt{\sigma_{source}^2 + \sigma_{specimen}^2 + \sigma_{det\,ector}^2} \qquad (8)$$

As a practical test on the accuracy and repeatability of such a system, a set of 1400 axis position measurements of all the above-mentioned axes was taken on a prototype apparatus as in Fig. 2 during a set of scans of a typical diffraction measurement. The actual readings taken from the encoders were stored and analyzed. Substituting the mean values for the axis positions together with their measured standard deviations into equation 8 then we obtained a final error of $\sigma$=0.35 $\mu$m for the total position error of the diffracted beam as viewed from the detector.

This corresponds to the "sphere of confusion" (SOC) parameter of a coaxial goniometric system. It ignores errors caused by thermal gradients or bending of the gantry beams, which may both be eliminated by use of Zerodur® metrological frames, and the small errors in the linear bearing systems, which were specified to be at the <2 arc sec value. It is an extraordinarily good figure for the SOC. For goniometers designed as in Figure 1, exceptional precautions (and costs) must be exercised in manufacture and assembly to achieve a SOC less than 25 $\mu$m.

## Conclusion

The present invention provides an improved positioning apparatus which has advantages of precision, flexibility of use, the ability to optimize dimensions for any X-ray metrological and inspection method, constancy of all mechanical impedances, and very high speed operation.

Although the present invention has been described herein with specific reference to X-ray metrology and inspection, it may also be applied to other situations in which highly accurate relative positioning of an (R,$\theta$) type is required, for example in optical diffractometers and spectrometers.

## Claims

1. Positioning apparatus for controlled relative angular and displacement positioning of a first, a second, and a third item, the apparatus comprising:

    a first mount for mounting the first item;
    a first linear actuator carrying the first mount for linear motion to and fro along a first axis;
    a second mount for mounting the second item;
    a second linear actuator carrying the second mount for linear motion to and fro along a second axis;
    said first and second axes being parallel;
    actuator displacement means for selectively displacing the first and second linear actuators along a third axis transverse to said first and second axes; and
    at least two of said mounts including respective rotary actuators for rotating the respective item about an axis transverse to the first, second and third axes.

2. Apparatus according to claim 1, in which the first and second axes are vertical.

3. Apparatus according to claim 2, in which said actuator displacement means comprises a gantry and third and fourth linear actuators for moving the first and second linear actuators along the gantry.

4. Apparatus according to claim 3, in which said first and second actuators are provided with means for counteracting the weight of the parts moved by the actuators.

5. Apparatus according to claim 4, in which said counteracting means comprises constant force springs.

6. An X-ray metrology or inspection apparatus comprising
    a first mount;
    a first linear actuator carrying the first mount for linear motion to and fro along a first axis;
    a second mount;
    a second linear actuator carrying the second mount for linear motion to and fro along a second axis;
    said first and second axes being parallel;
    actuator displacement means for selectively displacing the first and second linear actuators along a third axis transverse to said first and second axes;
    at least two of said mounts including respective rotary actuators for rotating an item carried thereby about an axis transverse to the first, second and third axes;
    the apparatus further comprising an X-ray source, an X-ray detector, and a specimen, each carried on one of said mounts.

**7.** Apparatus according to claim 6, in which the X-ray source is carried on the firs mount and the X-ray detector is carried on the second mount.

**8.** Apparatus according to claim 7, in which said rotary actuators are positioned to rotate the X-ray source and the X-ray detector.

**9.** Apparatus according to claim 8, including means for additionally moving the specimen.

**10.** Apparatus according to claim 6, including control means for converting $(R,\theta)$ signals into positional controls for the several actuators.

**11.** Apparatus according to claim 6, in which each linear actuator is provided with a linear position encoder.

**12.** Apparatus according to claim 11, in which said linear position encoders are each attached to at a single point, forming a metrology frame.

**13.** Apparatus according to claim 6, in which the first and second axes are vertical.

**14.** Apparatus according to claim 13, in which said actuator displacement means comprises a gantry and third and fourth linear actuators for moving the first and second linear actuators along the gantry.

**15.** Apparatus according to claim 14, in which said first and second actuators are provided with means for counteracting the weight of the parts moved by the actuators.

**16.** Apparatus according to claim 15, in which said counteracting means comprises constant force springs.

FIG. 1

(Prior Art)

FIG. 2

FIG. 3

FIG. 4

FIG. 5

EP 1 681 561 A1

FIG. 6

FIG. 7

EP 1 681 561 A1

**European Patent Office**

**EUROPEAN SEARCH REPORT**

Application Number

EP 05 27 0089

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FR 2 406 426 A (SIEMENS AG) 18 May 1979 (1979-05-18) * page 2, line 23 - page 3, line 40; figures 1,2 * ----- | 1-3,6-8, 13,14 | INV. G01N23/207 |
| X A | US 4 501 011 A (HAUCK ET AL) 19 February 1985 (1985-02-19) * column 3, line 6 - column 4, line 45 * <br><br> * column 5, paragraph 2 * * column 6, line 37 - line 43; figures 1-3 * ----- | 1-3,6-8, 13,14 4,5,10, 11,15,16 | |
| X | EP 0 512 620 A (N.V. PHILIPS' GLOEILAMPENFABRIEKEN; PHILIPS NV) 11 November 1992 (1992-11-11) * column 2, line 37 - column 3, line 15 * * column 4, line 20 - line 56; figure 1 * ----- | 1-3,6-9, 13,14 | |

TECHNICAL FIELDS SEARCHED (IPC)

G01N
H05G
A61B

The present search report has been drawn up for all claims

| Place of search | Date of completion of the search | Examiner |
|---|---|---|
| Munich | 11 April 2006 | Rouault, P |

EPO FORM 1503 03.82 (P04C01)

**ANNEX TO THE EUROPEAN SEARCH REPORT
ON EUROPEAN PATENT APPLICATION NO.**                      EP 05 27 0089

This annex lists the patent family members relating to the patent documents cited in  the above-mentioned European search report.
The members are as contained in the European Patent Office EDP file on
The European Patent Office is in no way liable for these particulars which are merely  given for the purpose of information.

11-04-2006

| Patent document cited in search report | | Publication date | Patent family member(s) | | Publication date |
|---|---|---|---|---|---|
| FR 2406426 | A | 18-05-1979 | DE | 2747583 A1 | 26-04-1979 |
| US 4501011 | A | 19-02-1985 | DE | 3369246 D1 | 26-02-1987 |
| | | | EP | 0103742 A1 | 28-03-1984 |
| | | | IL | 68905 A | 20-12-1987 |
| | | | JP | 59131333 A | 28-07-1984 |
| EP 0512620 | A | 11-11-1992 | JP | 5126767 A | 21-05-1993 |

EPO FORM P0459

For more details about this annex : see Official Journal of the European Patent Office, No. 12/82